# EUROPÄISCHE PATENTSCHRIFT

(11) **EP 2 315 688 B1**
(45) Veröffentlichungstag und Bekanntmachung des Hinweises auf die Patenterteilung: **25.04.2018**
(21) Anmeldenummer: 09777962.3
(22) Anmeldetag: 19.08.2009
(51) Int. Cl.: B60T 13/26, B60T 13/38, B60T 15/02, F16K 31/56

(54) **BISTABILES VENTIL UND VERFAHREN ZUM BETÄTIGEN EINES FESTSTELLBREMSSYSTEMS MIT EINEM BISTABILEN VENTIL**
BISTABLE VALVE AND METHOD FOR ACTUATING A PARKING BRAKE SYSTEM HAVING A BISTABLE VALVE
VALVE BISTABLE ET PROCÉDÉ POUR L'ACTIONNEMENT D'UN SYSTÈME DE FREIN DE STATIONNEMENT DOTÉ D'UNE VALVE BISTABLE

(30) Priorität: 20.08.2008 DE 102008038437
(43) Veröffentlichungstag der Anmeldung: 04.05.2011
(73) Patentinhaber: KNORR-BREMSE Systeme für Nutzfahrzeuge GmbH, 80809 München (DE)
(72) Erfinder: HILBERER, Eduard, 68766 Hockenheim (DE); ROETHER, Friedbert, 74389 Cleebronn (DE)
(74) Vertreter: Mattusch, Gundula
(86) Internationale Anmeldenummer: PCT/EP2009/005997
(87) Internationale Veröffentlichungsnummer: WO 2010/020402

(56) Entgegenhaltungen:
- EP-A- 0 256 891
- WO-A-03/097423
- DE-A1- 3 108 063
- DE-U1- 9 413 654
- US-A- 4 289 219

## Beschreibung

Die Erfindung betrifft ein bistabiles Ventil mit einer Selbsthaltevorrichtung gemäß Oberbegriff von Anspruch 1.

Die Erfindung betrifft weiterhin ein Verfahren zum Betätigen eines Feststellbremssystems mit einem eine Selbsthaltevorrichtung umfassenden bistabilen Ventil.

Ein Fahrzeug verfügt neben einer Betriebsbremse zum Abbremsen des Fahrzeugs während des Fahrbetriebs üblicherweise über eine Feststellbremse, die geeignet ist, das Fahrzeug im abgestellten Zustand gegen ein unbeabsichtigtes Wegrollen zu sichern. Diese Feststellbremse muss vor Antritt der Fahrt von dem Fahrer wieder gelöst werden, um ein erneutes Wegfahren des Fahrzeugs zu ermöglichen. Weiterhin sollte ein geschlossener Betriebszustand der Feststellbremse stabil sein, das heißt die Feststellbremse sollte sich im Defektfall nicht spontan lösen können. Zu diesem Zweck besitzen beispielsweise Nutzfahrzeuge mit einer Feder vorgespannte Federspeicherbremszylinder, die die jeweiligen Fahrzeugräder, denen sie zugeordnet sind, blockieren, falls kein aktives Betätigungssignal zum Lösen der Feststellbremse vorliegt.

Dieses Verhalten der Feststellbremse ermöglicht eine größtmögliche Fahrzeugsicherheit beim Abstellen des Fahrzeugs, kann jedoch während des Fahrbetriebs nachteilige Auswirkungen haben. Tritt während der Fahrt ein Defekt in der das Feststellbremssystem steuernden Elektronik beziehungsweise Mechanik auf, welcher das notwenige Signal zum Offenhalten der Feststellbremse unterbricht, wird die Feststellbremse sich selbsttätig schließen. Die dadurch verursachte Zwangsbremsung des Fahrzeugs kann spontan erfolgen und verkehrsgefährdend sein. Darüber hinaus kann die bereits geschlossene Feststellbremse nicht wieder geöffnet werden, weshalb ein Abschleppen des Fahrzeugs ebenfalls stark erschwert ist.

Dieser Problematik kann entgegengewirkt werden, indem die Feststellbremse auch im geöffneten Zustand stabil ist. Die Feststellbremse verharrt also im Defektfall während des Fahrbetriebs im geöffneten Zustand. Dies ist beispielsweise über ein bistabiles Ventil realisierbar, welches die Feststellbremse steuert. Das bistabile Ventil besitzt zwei stabile Schaltzustände, wobei ein erster Schaltzustand der geschlossenen Feststellbremse zugeordnet ist und ein zweiter Schaltzustand der geöffneten Feststellbremse zugeordnet ist.

Aus dem Stand der Technik sind unterschiedliche Möglichkeiten bekannt, die Bistabilität eines Ventils zu gewährleisten. Beispielsweise kann ein Permanentmagnet zwischen zwei stabilen Ruhelagen von einem durch einen elektrischen Impuls erzeugten magnetischen Feld bewegt werden.

Ein gattungsgemäßes Magnetventil ist aus der DE 31 080 63 A1 bekannt.

Weiterhin ist aus der DE 94 13 654 U ein bistabiles Magnetventil mit einer alternativ ausgestalteten Rastmechanik bekannt. Der Erfindung liegt die Aufgabe zu Grunde, ein alternatives bistabiles Ventil bereitzustellen, welches mit wenigen einfachen Bauteilen realisierbar ist und gleichzeitig eine hohe Zuverlässigkeit gewährleistet.

Diese Aufgabe wird mit den Merkmalen der unabhängigen Ansprüche gelöst.

Vorteilhafte Ausgestaltungen und Weiterbildungen der Erfindungen ergeben sich aus den abhängigen Ansprüchen.

Bei dem beschriebenem bistabilen Ventil ist vorgesehen, dass die Selbsthaltevorrichtung ein bewegliches Schiebeelement, eine feststehende Raste und ein gegenüber dem Schiebeelement und der Raste drehbares Tiefrastelement umfasst. Das bewegliche Schiebeelement und die feststehende Raste sowie das gegenüber dem Schiebeelement und der Raste drehbare Tiefrastelement bilden zusammen eine Kugelschreibermechanik. Diese Kugelschreibermechanik ist naturgemäß sehr störungsunanfällig und gleichzeitig einfach herstellbar. Das Schiebeelement ist dabei in seiner axialen Richtung beweglich, die Raste fixiert beziehungsweise feststehend und das Tiefrastelement gegenüber dem Schiebeelement und der Raste drehbar ausgeführt, wobei die Drehachse des Tiefrastelementes durch die axiale Bewegungsrichtung des Schiebeelementes definierbar ist.

Das erfindungsgemäße bistabile Ventil baut auf dem gattungsgemäßen Ventil dadurch auf, dass das bewegliche Schiebelement dazu ausgelegt ist, das drehbare Tiefrastelement axial zu verschieben und um die Verschiebeachse zu drehen, und dass die feststehende Raste dazu ausgelegt ist, die Drehung des Tiefrastelementes um die Verschiebeachse nach dem Ende der axialen Auslenkung durch das Betätigungselement fortzusetzen.

Vorzugsweise kann vorgesehen sein, dass das bistabile Ventil ein als eine elektrisch ansteuerbare Magnetspule ausgeführtes Betätigungselement zum Betätigen der Selbsthaltevorrichtung umfasst. Die Verwendung einer elektrisch ansteuerbaren Magnetspule zum Betätigen der Selbsthaltevorrichtung, das heißt zum axialen Auslenken des beweglichen Schiebeelements, ist eine ausgereifte Möglichkeit zum Ansteuern von Ventilen.

Alternativ kann vorgesehen sein, dass das bistabile Ventil ein als ein pneumatisch ansteuerbarer Pneumatikkolben ausgeführtes Betätigungselement zum Betätigen der Selbsthaltevorrichtung umfasst. Auch die Verwendung eines pneumatisch ansteuerbaren Pneumatikkolbens zum Betätigen der Selbsthaltevorrichtung, das heißt zum axialen Auslenken des beweglichen Schiebeelements, ist eine ausgereifte Möglichkeit zum Ansteuern von Ventilen.

Vorzugsweise wird ein vorstehend beschriebenes bistabiles Ventil im Rahmen eines Feststellbremssystems für Nutzfahrzeuge verwendet.

Besonders bevorzugt ist dabei, dass das bistabile Ventil ein Relaisventil vorsteuert, welches einen dem Feststellbremssystem zugeordneten Federspeicherbremszylinder ansteuert. Die Federspeicherbremszylinder des Feststellbremssystems müssen mit einem ausreichenden Druckniveau beaufschlagt werden, um zu öffnen. Um dieses innerhalb einer akzeptablen Zeitspanne erreichen zu können, muss das den Federspeicherbremszylinder ansteuernde Ventil einen genügenden Luftdurchsatz ermöglichen und daher verhältnismäßig groß und schwer ausgelegt sein. Das Vorsteuern eines monostabilen Relaisventils durch das bistabile Ventil, wobei das Relaisventil den Feststellbremszylinder ansteuert, ist vorteilhaft, da das monostabile Relaisventil einfacher baut als das bistabile Ventil und somit der genügende Luftdurchsatz mit einem geringeren baulichen Aufwand erreichbar ist.

Alternativ kann jedoch auch vorgesehen sein, dass das bistabile Ventil einen dem Feststellbremssystem zugeordneten Federspeicherbremszylinder direkt ansteuert. Eine direkte Ansteuerung durch das bistabile Ventil ist nicht ausgeschlossen, wobei die direkte Ansteuerung einen Teil der sonst notwendigen zusätzlichen Verrohrung einspart.

Das gattungsgemäße Verfahren wird dadurch weiterentwickelt, dass ein bewegliches Schiebeelement der Selbsthaltevorrichtung von einem Betätigungselement in axialer Richtung ausgelenkt wird, dass das bewegliche Schiebeelement ein gegenüber dem Schiebeelement drehbares Tiefrastelement axial verschiebt und um die Verschiebeachse dreht, dass durch die Drehung um die Verschiebeachse das Tiefrastelement nach dem Ende der axialen Auslenkung durch das Betätigungselement gegenüber einer feststehenden Raste in eine nächste Rastposition überführt wird, wobei zwei aufeinander folgende Rastpositionen den zwei stabilen Schaltzustände des bistabilen Ventils zugeordnet sind, und dass durch die Überführung der Raste in die nächste Rastposition das Feststellbremssystem in einen anderen Betriebszustand wechselt.

Auf diese Weise werden die Vorteile und Besonderheiten des erfindungsgemäßen Feststellbremssystems auch im Rahmen eines Verfahrens umgesetzt. Dies gilt auch für die nachfolgend angegebenen besonders bevorzugten Ausführungsformen des erfindungsgemäßen Verfahrens.

Dieses ist in nützlicher Weise dadurch weitergebildet, dass das bistabile Ventil einen Federspeicherbremszylinder direkt mit Druck ansteuert.

Vorzugsweise ist jedoch vorgesehen, dass das bistabile Ventil einen Federspeicherbremszylinder indirekt über ein Relaisventil mit Druck vorsteuert.

Die Erfindung wird nun mit Bezug auf die begleitenden Zeichnungen anhand einer besonders bevorzugten Ausführungsform beispielhaft erläutert.

Es zeigen:
- Figur 1: eine Selbsthaltevorrichtung, die über eine Magnetspule betätigbar ist;
- Figur 2: ein druckluftbetätigbares Verschiebeelement einer Selbsthaltevorrichtung;
- Figur 3: eine Darstellung zur Funktionserklärung der Selbsthaltevorrichtung und
- Figur 4: ein erfindungsgemäßes Feststellbremssystem.

In den folgenden Zeichnungen bezeichnen gleiche Bezugszeichen gleiche oder gleichartige Teile.

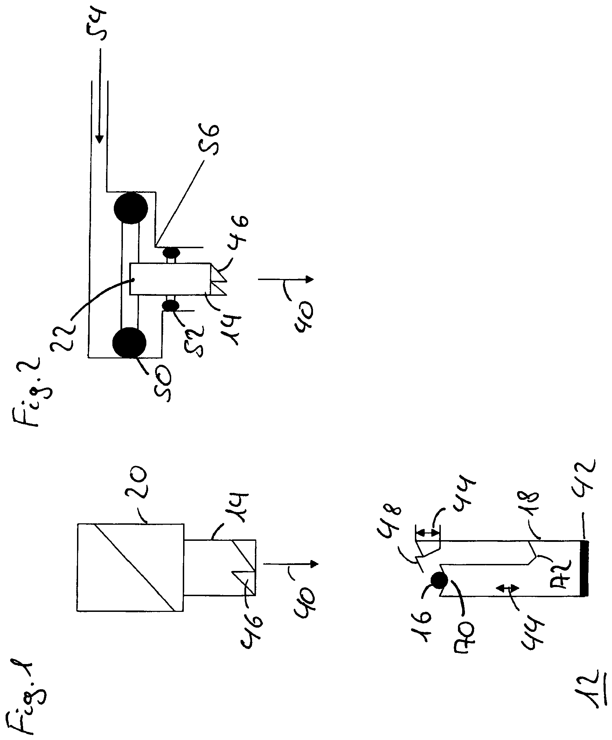

Figur 1 zeigt eine Selbsthaltevorrichtung, die über eine Magnetspule betätigbar ist. Eine dargestellte Selbsthaltevorrichtung 12 umfasst ein bewegliches Schiebeelement 14, welches durch Bestromen einer Magnetspule 20 in axialer Bewegungsrichtung 40 auf ein drehbares Tiefrastelement 18 zubewegt werden kann. Berührt ein an dem beweglichen Schiebeelement 14 angeordneter Zahnkranz 46 einen an dem drehbaren Tiefrastelement 18 angeordneten weiteren Zahnkranz 48, so wird auch das Tiefrastelement 18 um eine Hubhöhe 44 in axialer Richtung von dem beweglichen Schiebeelement 14 verschoben, wodurch eine feststehende Raste 16 gegenüber dem Tiefrastelement 18 aus einer Rastposition A 70 abgehoben wird. Aufgrund der Profile des Zahnkranzes 46 und des weiteren Zahnkranzes 48 wird das drehbare Tiefrastelement 18 auch gegenüber dem lediglich in axialer Richtung beweglichen Schiebelement 14 um die axiale Bewegungsrichtung 40 gedreht, wodurch die feststehende Raste 16 nunmehr in axialer Richtung oberhalb einer Rastposition B 72 liegt. Wird nun die Magnetspule 20 deaktiviert, das heißt, dass das bewegliche Schiebeelement 14 in seine Ausgangsposition zurückkehrt, so bewegt sich auch das drehbare Tiefrastelement 18 entgegen der ursprünglichen axialen Bewegungsrichtung 40 wieder zurück. Dabei kommt schließlich die feststehende Raste 16 in der Rastposition B 72 zur Ruhe. Die Selbsthaltevorrichtung 12 ist also von der ursprünglichen stabilen Rastposition A 70 in die neue stabile Rastposition B 72 gewechselt, die sich durch in axialer Bewegungsrichtung 40 verschiedene Positionen des Tiefrastelements 18 voneinander unterscheiden. Dies ermöglicht über einen Anschlussflansch 42 an dem Tiefrastelement 18 die Ansteuerung eines Ventils, welches mit Hilfe der Selbsthaltevorrichtung 12 ein bistabiles Ventil wird.

Figur 2 zeigt ein druckluftbetätigbares Schiebeelement einer Selbsthaltevorrichtung. Ein dargestelltes bewegliches Schiebeelement 14, welches in axialer Bewegungsrichtung 40 als Teil eines Pneumatikkolbens 22 beweglich gelagert ist, kann analog zu dem in Figur 1 mit einer Magnetspule betätigbaren Schiebeelement als Teil einer Selbsthaltevorrichtung verwendet werden. Zu diesem Zweck verfügt das bewegliche Schiebeelement 14 wieder über einen Zahnkranz 46, der geeignet ist, die axiale Bewegung des Schiebeelements 14 in eine Drehbewegung des zugeordneten nicht dargestellten Tiefrastelements 18 umzusetzen. Das druckbetätigbare Verschiebeelement verfügt über einen Druckanschluss 54, eine Entlüftung 56, eine Dichtung 50 und eine weitere Dichtung 52, die in herkömmlicher Weise eine Auslenkung des Schiebeelements 14 in axialer Bewegungsrichtung 40 ermöglichen.

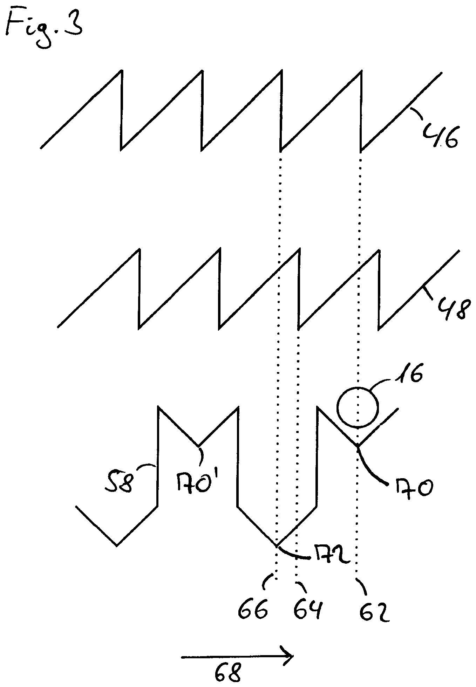

Figur 3 zeigt eine Darstellung zur Funktionserklärung der Selbsthaltevorrichtung. Die dargestellte Selbsthaltevorrichtung ist stark schematisiert und eine Projektion entlang des Umfangs der Selbsthaltevorrichtung in die Ebene. Daher ist die Darstellung in einer Bewegungsrichtung 68 periodisch fortsetzbar. Der Zahnkranz 46 der an dem beweglichen Schiebeelement angeordnet ist, ist lediglich in axialer Richtung beweglich, das heißt senkrecht zu der Bewegungsrichtung 68. Der weitere Zahnkranz 48 und das darunter angeordnete Profil mit den beiden Rastpositionen A und B 70, 72 sind an dem drehbaren Tiefrastelement angeordnet, wobei die Drehrichtung ebenfalls durch die Bewegungsrichtung 68 vorgegeben ist. Weiterhin ist die feststehende Raste 16 in der Rastposition A 70 als eine Ausgangsposition 62 eingezeichnet. Die Funktionsweise der exemplarisch dargestellten Kugelschreibermechanik wird im Folgenden ausführlich beschrieben.

Durch Betätigen des beweglichen Schiebeelements wird der Zahnkranz 46 senkrecht zu der Bewegungsrichtung 68 auf den weiteren Zahnkranz 48 zubewegt. Nachdem beide Zahnkränze 46, 48 einander berühren, wird die axiale Bewegung des Zahnkranzes 46 aufgrund der Zahnprofile des Zahnkranzes 46 und des weiteren Zahnkranzes 48 sowohl in eine axiale Bewegung des Tiefrastelementes mit dem weiteren Zahnkranz 48 und dem Rastprofil 58 als auch in eine Drehbewegung in Richtung der Bewegungsrichtung 68 umgesetzt. Dabei wird zunächst das Rastprofil 58 sowohl in axialer Richtung entlang der Linie 62 verschoben, als auch in Bewegungsrichtung 68. Dieser Prozess endet bei Erreichen einer Zwischenposition auf einer Linie 64, bei der eine weitere Drehbewegung des Tiefrastelements in die Bewegungsrichtung 68 aufgrund des Zahnprofils der beiden Zahnkränze 46, 48 nicht mehr möglich ist. Das Tiefrastelement hat sich somit unter der feststehenden Raste 16 in die Bewegungsrichtung 68 weitergedreht, wodurch die feststehende Raste 16 nunmehr auf der die Zwischenposition 64 markierenden Linie liegt.

Wird das Betätigen der Selbsthaltevorrichtung beendet, so bewegt sich der Zahnkranz 46 in axialer Richtung wieder in seine dargestellte Ausgangsposition zurück. Dadurch bewegt sich das Tiefrastelement mit dem weiteren Zahnkranz 48 und dem Rastprofil 58 ebenfalls in axialer Richtung zurück. Aufgrund der bereits erfolgten Drehung in Bewegungsrichtung 68 kann die Raste 16 jedoch nicht mehr in die Rastposition A 70 gelangen, sonder fällt nunmehr entlang der von der Zwischenposition 64 markierten Linie auf die Rastposition B 72 zu, wobei die feststehende Raste 16 zum Erreichen der Endposition 66 das Tiefrastelement aufgrund des Rastprofils 58 ein Stück in die Bewegungsrichtung 68 weiterdreht. Die Selbsthaltevorrichtung ist damit von der Rastposition A 70 in die Rastposition B 72 geschaltet. Ein erneutes Betätigen der Selbsthaltevorrichtung würde den beschriebenen Vorgang lediglich wiederholen, wobei nunmehr die Selbsthaltevorrichtung aus der Rastposition B 72 in die Rastposition A 70' in Bewegungsrichtung 68 weiterschalten würde.

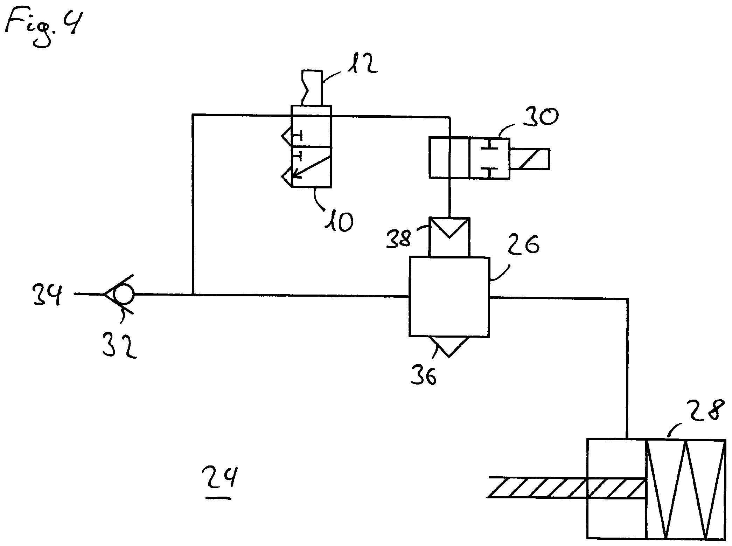

Figur 4 zeigt ein erfindungsgemäßes Feststellbremssystem. Ein Feststellbremssystem 24 wird von einem Druckversorgungsanschluss 34 mit Druckluft versorgt und umfasst einen Federspeicherbremszylinder 28, ein Relaisventil 26, ein Halteventil 30 und ein bistabiles Ventil 10, wobei die Druckversorgung des Relaisventils 26 und des bistabilen Ventils 10 stromabwärts eines Rückschlagventils 32 sichergestellt ist. Der Federspeicherbremszylinder 28 wird von dem Relaisventil 26 mit Druckluft beaufschlagt, wobei das Relaisventil 26 über eine eigene Entlüftung 36 verfügt und über einen Steueranschluss 38 von dem bistabilen Ventil 10 vorgesteuert ist. Das bistabile Ventil 10 verfügt über eine erfindungsgemäße Selbsthaltevorrichtung 12, die bereits beschrieben wurde. Zwischen dem bistabilen Ventil 10 und dem Relaisventil 26 ist das Halteventil angeordnet, welches als 2/2-Wegeventil ausgelegt ist und pulsweitmoduliert angesteuert werden kann. In seiner nicht dargestellten Schaltstellung kann das Halteventil 30 den Druck an dem Steuereingang 38 halten. Durch die pulsweitenmodulierte Ansteuerbarkeit des Halteventils 30 ist eine Stufbarkeit der Bremswirkung des Feststellbremssystems 24 realisierbar.

### Bezugszeichenliste

- 10: bistabiles Ventil
- 12: Selbsthaltevorrichtung
- 14: bewegliches Schiebeelement
- 16: feststehende Raste
- 18: drehbares Tiefrastelement
- 20: Magnetspule
- 22: Pneumatikkolben
- 24: Feststellbremssystem
- 26: Relaisventil
- 28: Federspeicherbremszylinder
- 30: Halteventil
- 32: Rückschlagventil
- 34: Druckversorgungsanschluss
- 36: Entlüftung
- 38: Steuereingang
- 40: axiale Bewegungsrichtung
- 42: Anschlussflansch
- 44: Hubhöhe
- 46: Zahnkranz
- 48: weiterer Zahnkranz
- 50: Dichtung
- 52: weitere Dichtung
- 54: Druckanschluss
- 56: Entlüftung
- 58: Rastprofil
- 62: Ausgangsposition
- 64: Zwischenposition
- 66: Endposition
- 68: Bewegungsrichtung
- 70: Rastposition A
- 72: Rastposition B
- 70': Rastposition A

## Patentansprüche

1. Bistabiles Ventil (10) mit einer Selbsthaltevorrichtung (12), die
- ein bewegliches Schiebeelement (14), das von einem Betätigungselement (20, 22) des Bistabilen Ventils (10) in einer axialen Richtung auslenkbar ist,
- eine feststehende Raste (16) und
- ein gegenüber dem Schiebeelement (14) und der Raste (16) drehbares Tiefrastelement (18) umfasst,
**dadurch gekennzeichnet,**
- **dass** das bewegliche Schiebelement (14) dazu ausgelegt ist, das drehbare Tiefrastelement (18) axial zu verschieben und um die Verschiebeachse zu drehen, und
- **dass** die feststehende Raste (16) dazu ausgelegt ist, die Drehung des Tiefrastelementes (18) um die Verschiebeachse nach dem Ende der axialen Auslenkung durch das Betätigungselement (20, 22) fortzusetzen.

2. Bistabiles Ventil (10) nach Anspruch 1, **dadurch gekennzeichnet, dass** das bistabile Ventil (10) ein als eine elektrisch ansteuerbare Magnetspule ausgeführtes Betätigungselement (20) zum Betätigen der Selbsthaltevorrichtung (12) umfasst.

3. Bistabiles Ventil (10) nach Anspruch 1, **dadurch gekennzeichnet, dass** das bistabile Ventil (10) ein als ein pneumatisch ansteuerbarer Pneumatikkolben ausgeführtes Betätigungselement (22) zum Betätigen der Selbsthaltevorrichtung (12) umfasst.

4. Druckluftbetriebenes Feststellbremssystem (24) für ein Nutzfahrzeug mit einem bistabilen Ventil (10) gemäß einem der vorhergehenden Ansprüche.

5. Druckluftbetriebenes Feststellbremssystem (24) gemäß Anspruch 4, **dadurch gekennzeichnet, dass** das bistabile Ventil (10) ein Relaisventil (26) vorsteuert, welches einen dem Feststellbremssystem (24) zugeordneten Federspeicherbremszylinder (28) ansteuert.

6. Druckluftbetriebenes Feststellbremssystem (24) gemäß Anspruch 4, **dadurch gekennzeichnet, dass** das bistabile Ventil (10) einen dem Feststellbremssystem (24) zugeordneten Federspeicherbremszylinder (28) direkt ansteuert.

7. Verfahren zum Betätigen eines Feststellbremssystems (24) mit einem eine Selbsthaltevorrichtung (12) umfassenden bistabilen Ventil (10), **dadurch gekennzeichnet,**
- **dass** ein bewegliches Schiebeelement (14) der Selbsthaltevorrichtung (12) von einem Betätigungselement (20, 22) in axialer Richtung ausgelenkt wird,
- **dass** das bewegliche Schiebeelement (14) ein gegenüber dem Schiebeelement (14) drehbares Tiefrastelement (18) axial verschiebt und um die Verschiebeachse dreht,
- **dass** durch die Drehung um die Verschiebeachse das Tiefrastelement (18) nach dem Ende der axialen Auslenkung durch das Betätigungselement (20, 22) gegenüber einer feststehenden Raste (16) in eine nächste Rastposition überführt wird, wobei zwei aufeinander folgende Rastpositionen den zwei stabilen Schaltzustände des bistabilen Ventils (10) zugeordnet sind, und
- **dass** durch die Überführung der Raste (16) in die nächste Rastposition das Feststellbremssystem (24) in einen anderen Betriebszustand wechselt.

8. Verfahren gemäß Anspruch 7, **dadurch gekennzeichnet, dass** das bistabile Ventil (10) einen Federspeicherbremszylinder (28) direkt mit Druck ansteuert.

9. Verfahren gemäß Anspruch 7, **dadurch gekennzeichnet, dass** das bistabile Ventil (10) einen Federspeicherbremszylinder (28) indirekt über ein Relaisventil (26) mit Druck vorsteuert.

## Claims

1. Bistable valve (10) having a self-holding device (12) comprising
- a movable sliding element (14), which can be deflected in an axial direction by an actuating element (20, 22) of the bistable valve (10),
- a stationary catch (16) and
- a deep latching element (18) rotatable in relation to the sliding element (14) and the catch (16),
**characterised in that**
- the sliding element (14) is designed to displace the rotatable deep latching element (18) axially and to rotate it about the displacement axis, and
- the stationary catch (16) is designed to continue the rotation of the deep latching element (18) about the displacement axis after the end of the axial deflection by the actuating element (20, 22)

2. Bistable valve (10) according to claim 1, **characterised in that** the bistable valve (10) comprises an actuating element (20) in the form of an electrically activated magnetic coil for actuating the self-holding device (12).

3. Bistable valve (10) according to claim 1, **characterised in that** the bistable valve (10) comprises an actuating element (22) in the form of a pneumatically activated pneumatic piston for actuating the self-holding device (12).

4. Pneumatically operated parking brake system (24) for a commercial vehicle having a bistable valve (10) according to any of the preceding claims.

5. Pneumatically operated parking brake system (24) according to claim 4, **characterised in that** bistable valve (10) serves as pilot control for a relay valve (26), which activates a spring brake cylinder (28) assigned to the parking brake system (24).

6. Pneumatically operated parking brake system (24) according to claim 4, **characterised in that** bistable valve (10) directly activates a spring brake cylinder (28) assigned to the parking brake system (24).

7. Method for actuating a parking brake system (24) having a bistable valve (10) comprising a self-holding device (12), **characterised in that**
- a moveable sliding element (14) of the self-holding device (12) is deflected in an axial direction by an actuating element (20, 22),
- the moveable sliding element (14) axially displaces a deep latching element (18) rotatable in relation to the sliding element (14) and rotates it about the displacement axis,
- on completion of the axial deflection by the actuating element (20, 22) the deep latching element (18) is carried by the rotation about the displacement axis into the next detent position relative to a stationary catch (16), two consecutive detent positions being assigned to the two stable switching states of the bistable valve (10), and
- the parking brake system (24) is shifted into another operating state by carrying the catch (16) into the next detent position.

8. Method according to claim 7, **characterised in that** the bistable valve (10) activates a spring brake cylinder (28) through the direct application of pressure.

9. Method according to claim 7, **characterised in that** the bistable valve (10) serves for the indirect pilot pressure control of a spring brake cylinder (28) via a relay valve (26).

## Revendications

1. Vanne (10) bistable ayant un système (12) de maintien automatique, lequel comprend
- un élément (14) mobile de coulissement, qui peut être dévié dans une direction axiale par un élément (20, 22) d'actionnement de la vanne (10) bistable,
- un cran (16) d'arrêt fixe et
- un élément (18) d'encliquetage profond pouvant tourner par rapport à l'élément (14) coulissant et au cran (16) d'arrêt,
**caractérisé**
- **en ce que** l'élément (14) mobile coulissant est conçu pour déplacer axialement l'élément (18) tournant d'encliquetage profond et pour le faire tourner autour de l'axe de déplacement et
- **en ce que** le cran (16) d'arrêt fixe est conçu pour faire continuer la rotation de l'élément (18) d'encliquetage profond autour de l'axe de déplacement après la fin de la déviation axiale par l'élément (20, 22) d'actionnement.

2. Vanne (10) bistable suivant la revendication 1, **caractérisé en ce que** la vanne (10) bistable comprend, pour l'actionnement du système (12) de maintien automatique, un élément (20) d'actionnement réalisé sous la forme d'une bobine d'électroaimant pouvant être excitée électriquement.

3. Vanne (10) bistable suivant la revendication 1, **caractérisé en ce que** la vanne (10) bistable comprend, pour l'actionnement du système (12) de maintien automatique, un élément (22) d'actionnement réalisé sous la forme d'un piston pneumatique pouvant être excité pneumatiquement.

4. Système (24) de frein de stationnement fonctionnant à l'air comprimé pour un véhicule utilitaire ayant un dispositif (10) bistable suivant l'une des revendications précédentes.

5. Système (24) de frein de stationnement fonctionnant à l'air comprimé suivant la revendication 4, **caractérisé en ce que** la vanne (10) bistable pilote une vanne (26)relais, qui commande un cylindre (28) de frein à ressort accumulateur associé au système (24) de frein de stationnement.

6. Système (24) de frein de stationnement suivant la revendication 4, **caractérisé en ce que** la vanne (10) bistable commande directement un cylindre (28) de frein à ressort accumulateur associé au système (24) de frein de stationnement.

7. Procédé pour actionner un système (24) de frein de stationnement, ayant une vanne (10) bistable, comprenant un système (12) de maintien automatique, **caractérisé**
- **en ce qu'**un élément (14) mobile coulissant du système (12) de maintien automatique est dévié dans la direction axiale par un élément (20, 22) d'actionnement,
- **en ce que** l'élément (14) mobile coulissant déplace axialement un élément (18) d'encliquetage profond pouvant tourner par rapport à l'élément (14) coulissant et le fait tourner autour de l'axe de déplacement,
- **en ce que**, par la rotation autour de l'axe de déplacement de l'élément (18) d'encliquetage profond après la fin de la déviation axiale par l'élément (20, 22) d'actionnement par rapport à un cran (16) d'arrêt fixe, on passe dans une position d'encliquetage suivante, deux positions d'encliquetage se succédant étant affectées aux deux états de commutation stable de la vanne (10) bistable et
- **en ce qu'**en faisant passer le cran (16) d'arrêt dans la position d'encliquetage suivante, le système (14) de frein de stationnement passe dans un autre état de fonctionnement.

8. Procédé suivant la revendication 7, **caractérisé en ce que** la vanne (10) bistable commande, directement par la pression, un cylindre (28) de frein à ressort accumulateur.

9. Procédé suivant la revendication 7, **caractérisé en ce que** la vanne (10) bistable pilote par la pression, indirectement par une vanne (26) relais, un cylindre (28) de frein à ressort accumulateur.
